# EUROPÄISCHE PATENTSCHRIFT

(11) **EP 1 952 104 B1**
(45) Veröffentlichungstag und Bekanntmachung des Hinweises auf die Patenterteilung: **29.06.2011**
(21) Anmeldenummer: 06828542.8
(22) Anmeldetag: 20.11.2006
(51) Int. Cl.: G01G 21/22, G01G 23/00

(54) **WÄGEZELLE FÜR BEWEGTE GÜTER**
WEIGHING CELL FOR MOVING GOODS
CAPTEUR DE BALANCE UTILISEE POUR DES ELEMENTS MOBILES

(30) Priorität: 21.11.2005 DE 102005055753
(43) Veröffentlichungstag der Anmeldung: 06.08.2008
(73) Patentinhaber: Wipotec Wiege- und Positioniersysteme GmbH, 67657 Kaiserslautern (DE)
(72) Erfinder: DÜPPRE, Theo, 67663 Kaiserslautern (DE)
(74) Vertreter: Mischung, Ralf
(86) Internationale Anmeldenummer: PCT/DE2006/002038
(87) Internationale Veröffentlichungsnummer: WO 2007/057002

(56) Entgegenhaltungen:
- EP-A2- 1 400 789
- DE-A1- 2 113 880
- US-A- 3 773 124
- US-A- 5 304 745

## Beschreibung

Die vorliegende Erfindung betrifft eine Wägezelle zum Wiegen bewegter Güter nach dem Oberbegriff des Anspruchs 1.

Aus der Wägetechnik ist es bekannt, das Gewicht bewegter Güter zu erfassen. Die dazu verwendeten Waagen können leicht in den Herstellungsprozess eingegliedert werden.

Die Bewegung der Güter wird dabei durch Förderanlagen realisiert, deren Gewicht üblicherweise ebenfalls durch die Wägezelle aufgenommen wird. Die Förderanlage umfasst dabei auch wenigstens einen Antrieb, der die zu bewegenden Güter in Förderrichtung antreibt. Der Antrieb bzw. der Motor wird dazu an eine Spannungsversorgung angeschlossen. Weitere Anschlüsse für Sensoren oder für Signal übertragungen jeder Art kommen oft hinzu.

Die EP 1 400 789 A2 beschreibt eine zylindrisch ausgeformte elektrische Anschlussstruktur, um mehrere Wägezellen reihum in radialer Richtung daran anschließen zu können. Jede Wägezelle nimmt eine vibrationsgetriebene Förderanlage auf und ermittelt das Gewicht der geförderten Güter.

Die US 5,304,745 beschreibt ein modulares Wiegesystem für geförderte Güter. Ein Förderbandabschnitt ruht dabei auf einer Wägezelle, so dass die in diesem Abschnitt geförderten Güter von der Wägezelle erfasst und gewogen werden können. Die aus dem Förderbandabschnitt und der zugehörigen Wägezelle gebildete Einheit lässt sich durch Schnellspannmittel lösen und gegen eine andere derartige Einheit austauschen.

Bei diesem Stand der Technik hat sich der Nachteil gezeigt, dass der elektrische Anschluss der Förderanlage aufwendig sein kann, unter Umständen mehrere Kabel umfasst und auch das Wägeergebnis negativ beeinflusst, wenn das eine Ende der Kabel an der mitgewogenen Förderanlage angeschlossen ist, während das andere Ende an einer ortsfesten Spannungsversorgung anliegt.

Aufgabe der Erfindung ist es daher, eine Wägezelle für eine Förderanlage zu schaffen, welche die vorgenannten Nachteile überwindet.

Die Aufgabe wird gelöst durch eine Wägezelle nach Anspruch 1.

Die Erfindung geht von der Erkenntnis aus, dass die elektrische und/oder mechanische Verbindung der Förderanlage mit der Wägezelle vorteilhaft durch eine Steckverbindung gebildet werden kann, welche an dem Lastaufnehmer der Wägezelle ausgebildet ist. Durch diese Steckverbindung wird die Förderanlage mechanisch und/oder elektrisch mit der Wägezelle verbunden. Da der der Wägezelle zugeordnete Teil der Steckverbindung in dem Lastaufnehmer ausgebildet ist, wird die erforderliche Verbindung ausschließlich durch diese Steckverbindung realisiert. Insbesondere die elektrische Anbindung der Förderanlage erfolgt also ausschließlich durch die in dem Lastaufnehmer ausgebildete Steckverbindung, so dass weitere Verbindungen über extern angeordnete Kabel nicht nötig sind. Die Steckverbindung, die sich in einen an der Wägezelle ausgebildeten ersten Teil und einen komplementär dazu ausgebildeten, an der Förderanlage angeordneten zweiten Teil aufteilt, gewährleistet so eine besonders einfache und schnelle Verbindung bzw. Abkopplung der Förderanlage von der Wägezelle. Das zusätzliche Abklemmen oder Abschrauben von Kabeln oder sonstigen Halterelementen ist nicht nötig, wodurch der Auswechsel- oder Reinigungsvorgang vorteilhaft erleichtert wird.

Eine weitere vorteilhafte Ausführungsform der Erfindung sieht vor, dass die Förderanlage allein durch Aufsetzen der Förderanlage auf den Lastaufnehmer bzw. Entnehmen der Förderanlage von dem Lastaufnehmer unter Nutzung der Steckverbindung vollständig mechanisch und/oder elektrisch verbindbar bzw. trennbar ist. Die mechanische, insbesondere aber die elektrische Verbindung kommt also erfindungsgemäß durch das Aufsetzen der Förderanlage auf den Lastaufnehmer zustande, so dass separate Anschlussarbeiten nicht erforderlich sind. Dies beschleunigt die Montage erheblich. Darüber hinaus wird ein Verwechseln von elektrischen Anschlüssen, eine Verpolung oder ein Verdrehen der Steckverbindung durch geeignete mechanische Führungsmittel vorteilhaft vermieden, wie noch zu sehen sein wird.

Gemäß einer weiteren vorteilhaften Ausführungsform der Erfindung erfährt die Förderanlage durch Aufsetzen der Förderanlage auf den Lastaufnehmer über die Steckverbindung alle für ihren Betrieb erforderlichen elektrischen Anbindungen. Die Steckverbindung ist also die einzige Kopplungsstelle elektrischer Art, durch die die Förderanlage ihre Stromversorgung bzw. Steuersignale erhält oder abgibt. Keine weitere elektrische Anbindung ist nötig und vorgesehen. Dies vereinfacht den Aufbau und den Anschluss der Förderanlage, da insbesondere keine separaten Kabel zusätzlich zu der Steckverbindung erforderlich sind. In einem besonders einfachen Fall weist die Förderanlage einen der Wägezelle zugewandten Sockel auf, welcher auf dem Lastaufnehmer der Wägezelle sitzt und die Gewichtskraft in die Wägezelle überträgt. An der der Wägezelle zugewandten Seite dieses Sockels kann die erfindungsgemäße Steckverbindung ausgebildet sein, so dass durch Einstecken dieses Verbindungsteils in den komplementär dazu ausgebildeten Verbindungsteil der Wägezelle die Waage mit Förderanlage und Wägezelle betriebsbereit montiert ist.

Eine besonders vorteilhafte Ausführungsform der Wägezelle sieht vor, dass die Steckverbindung gegen Verdrehen oder Verpolung gesichert ausgeführt ist. Dazu können mechanische Hilfselemente vorgesehen sein, welche das Einsetzen der einzelnen Steckverbindungsteile nur in einer gewählten Ausrichtung zulassen. Auch können solche Hilfsmittel dazu verwendet werden, ein verdrehtes oder nicht fluchtendes Ineinanderschieben der einzelnen Verbindungsteile zu vermeiden, indem entsprechende Zwangsführungen ausgebildet werden. Dies erhöht die Sicherheit und vereinfacht darüber hinaus das Herstellen der Verbindung.

Gemäß einer weiteren vorteilhaften Ausführungsform der Erfindung ist die Steckverbindung explosionsgeschützt ausgeführt, um entsprechenden Anforderungen genüge zu tun. Sie kann dafür in geeigneter Weise gekapselt oder vergleichbar ausgebildet sein, um die Zündung explosionsfähiger Gemische sicher zu verhindern.

Weiterhin kann die Steckverbindung auch einen geeigneten IP-Schutz aufweisen. Dadurch sollen besonders empfindliche oder gefährliche Komponenten der Steckverbindung gegen äußere Einflüsse geschützt werden, insbesondere gegen Verschmutzung, Feuchtigkeit etc.

Schließlich kann die Steckverbindung zur Verbesserung der elektromagnetischen Verträglichkeit auch metallisch gekapselt sein. Dadurch werden die Einflüsse hochfrequenter Strahlung in die Verbindung hinein oder aus der Verbindung heraus weitgehend unterbunden und benachbarte elektronische Komponenten entsprechend geschützt.

Als besonders vorteilhaft hat sich eine Wägezelle mit einer Schutzvorrichtung an der Steckverbindung herausgestellt, welche beim Trennen der Verbindung die einzelnen Verbindungsteile gegen unbeabsichtigtes Kontaktieren schützt. Dabei kann es sich insbesondere um einen - vorzugsweise federbelasteten - Klappmechanismus handeln, der beim Aufsetzen der Förderanlage eine Abdeckung selbsttätig zur Seite klappt, um die Kontakte (insbesondere die elektrischen Kontakte) der Verbindungsteile für das Herstellen der Verbindung freizugeben. Umgekehrt soll der Mechanismus bei der Entnahme der Förderanlage die Abdeckung selbsttätig so über die jeweiligen Kontakte legen, dass diese gegen Kontaktierung oder auch Verschmutzung etc. bestmöglich geschützt sind.

Eine weitere vorteilhafte Ausführungsform der Erfindung sieht vor, dass die Wägezelle eine lösbare Schnellspannverbindung aufweist. Diese Schnellspannverbindung soll die auf die Wägezelle aufgesetzte und mit ihr verbundene Förderanlage relativ zur Wägezelle fixieren. Da die Schnellspannverbindung auch lösbar ist, wird einerseits eine sichere mechanische und elektrische Verbindung zwischen Wägezelle und Förderanlage hergestellt, andererseits lässt sich die Verbindung leicht lösen und die Schnellspannverbindung von der Wägezelle entsprechend leicht trennen. Dies erleichtert die Montage oder auch den Austausch der Wägezelle oder der Förderanlage.

Als besonders vorteilhaft hat sich herausgestellt, die Schnellspannverbindung werkzeuglos betätigbar zu machen. In diesem Fall lässt sich die gewünschte stabile Verbindung leicht manuell herstellen, ohne dass dafür besonderes Werkzeug zu verwenden wäre. Dies erleichtert die Montage bzw. Demontage wiederum erheblich.

Weitere vorteilhafte Ausführungsformen ergeben sich aus den Unteransprüchen.

Eine Ausführungsform der Erfindung wird nachstehend anhand eines Figurenbeispiels erläutert.

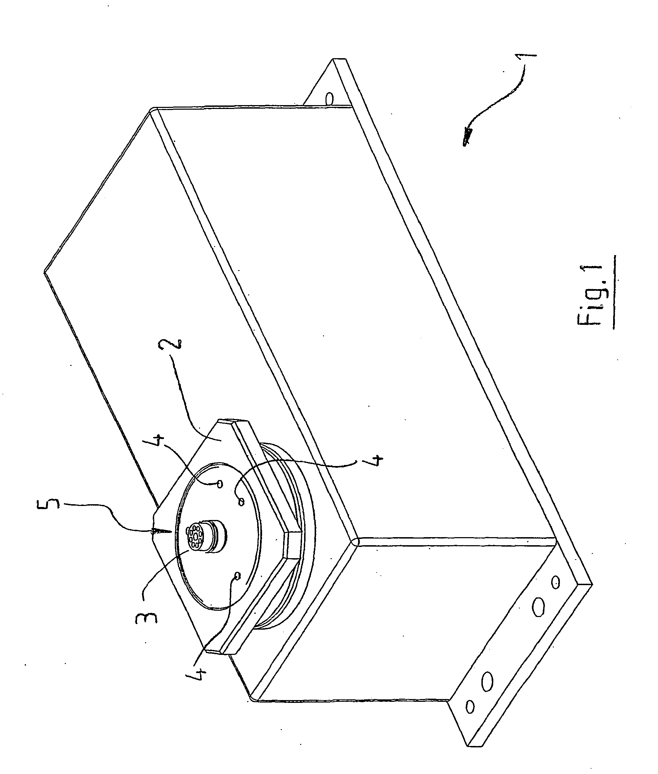

Die einzige Figur 1 zeigt dabei in schematischer perspektivischer Ansicht eine Wägezelle 1. Die Wägezelle 1 weist einen Lastaufnehmer 2 auf, der zur Belastung mit einer zu erfassenden Gewichtskraft ausgebildet ist. Die Gewichtskraft soll durch eine nicht dargestellte Förderanlage in den Lastaufnehmer 2 übertragen werden, wobei die Förderanlage auf den Lastaufnehmer 2 aufzusetzen ist.

Der Lastaufnehmer umfasst einen Teil 3 einer Steckverbindung, welche die mechanische und elektrische Verbindung der Wägezelle mit der nicht dargestellten, auf den Lastaufnehmer 2 aufzusetzenden Förderanlage herstellt. Diese Förderanlage weist dabei den anderen, komplementär zum ersten Verbindungsteil ausgeführten zweiten Teil der Steckverbindung auf.

Die Steckverbindung 3 umfasst Anschläge zur Ausrichtung des nicht dargestellten zweiten Teils der Steckverbindung. Auch sind Zentriermittel in Form von Bohrungen (4) vorgesehen, welche mit geeigneten Zentrierstiften des nicht dargestellten zweiten Teils der Verbindung zusammenwirken und so eine genaue mechanische Ausrichtung der beiden Verbindungsteile zueinander ermöglichen.

Weiterhin umfasst die Verbindung eine Anordnung 5 von elektrischen Kontakten, die ebenfalls mit komplementär dazu ausgebildeten Kontakten an dem nicht dargestellten anderen Verbindungsteil zusammenwirken, und so sämtliche elektrischen oder Signal-Verbindungen zur Förderanlage herstellen.

Eine Schnellspannverbindung zur lösbaren Befestigung von Förderanlage und Wägezelle ist nicht dargestellt.

## Patentansprüche

1. Wägezelle (1) zur Erfassung des Gewichts transportierter Güter,
a) wobei die Güter durch eine Förderanlage transportiert werden, und
b) wobei die Förderanlage zur Übertragung der zu erfassenden Gewichtskräfte auf einem Lastaufnehmer (2) der Wägezelle (1) aufsitzt,
**dadurch gekennzeichnet, dass**
c) der Lastaufnehmer (2) der Wägezelle (1) zur elektrischen und/oder mechanischen Verbindung mit der Förderanlage einen ersten Teil (3) einer Steckverbindung aufweist, welcher mit einem dazu komplementär ausgebildeten, an der Förderanlage angeordneten zweiten Teil der Steckverbindung verbindbar ist.

2. Wägezelle nach Anspruch 1, **dadurch gekennzeichnet, dass** die Förderanlage durch Aufsetzen der Förderanlage auf den Lastaufnehmer bzw. Entnehmen der Förderanlage von dem Lastaufnehmer vollständig mechanisch und/oder elektrisch verbindbar bzw. trennbar ist.

3. Wägezelle nach einem der vorhergehenden Ansprüche, **dadurch gekennzeichnet, dass** die Förderanlage durch Aufsetzen der Förderanlage auf den Lastaufnehmer über die Steckverbindung alle für ihren Betrieb erforderlichen elektrischen Anbindungen erfährt.

4. Wägezelle nach einem der vorhergehenden Ansprüche, **dadurch gekennzeichnet, dass** die Steckverbindung gegen Verdrehen oder Verpolung gesichert ausgeführt ist.

5. Wägezelle nach einem der vorhergehenden Ansprüche, **dadurch gekennzeichnet, dass** die Steckverbindung Zentriermittel (4) zur passgenauen Ausrichtung der beiden Teile der Steckverbindung beim Zusammensetzen aufweist.

6. Wägezelle nach einem der vorhergehenden Ansprüche, **dadurch gekennzeichnet, dass** die Steckverbindung explosionsgeschützt und/oder IP-geschützt und/oder zur Verbesserung der elektromagnetischen Verträglichkeit metallisch gekapselt ist.

7. Wägezelle nach einem der vorhergehenden Ansprüche, **dadurch gekennzeichnet, dass** die Wägezelle eine lösbare Schnellspannverbindung aufweist, mit der die aufgesetzte und verbundene Förderanlage relativ zur Wägezelle fixierbar ist.

8. Wägezelle nach dem vorhergehenden Anspruch, **dadurch gekennzeichnet, dass** die Schnellspannverbindung werkzeuglos betätigbar ist.

## Claims

1. A weighing cell (1) for detecting the weight of transported goods,
a) wherein the goods are transported by a conveyor system, and
b) wherein the conveyor system sits on a load-receiver (2) of the weighing cell (1) in order to transmit the forces due to weight that are to be detected,
**characterised in that**
c) the load-receiver (2) of the weighing cell (1) has for the electrical and/or mechanical connection to the conveyor system a first portion (3) of a plug connection which can be connected to a second portion of the plug connection that is formed so as to be complementary thereto and is arranged on the conveyor system.

2. A weighing cell according to claim 1, **characterised in that** the conveyor system can be completely mechanically and/or electrically connected or disconnected by setting the conveyor system onto the load-receiver or removing the conveyor system from the load-receiver.

3. A weighing cell according to one of the preceding claims, **characterised in that** by setting the conveyor system onto the load-receiver by way of the plug connection all the electrical links are established for the conveyor system that are required for the operation thereof.

4. A weighing cell according to one of the preceding claims, **characterised in that** the plug connection is realized so as to be secured against twisting or polarity-reversal.

5. A weighing cell according to one of the preceding claims, **characterised in that** the plug connection has centring means (4) for alignment, with an exact fit, of the two portions of the plug connection when set together.

6. A weighing cell according to one of the preceding claims, **characterised in that** the plug connection is explosion-proof and/or IP-protected and/or metallically encapsulated in order to improve the electromagnetic compatibility.

7. A weighing cell according to one of the preceding claims, **characterised in that** the weighing cell has a detachable quick-action clamping connection with which the conveyor system that is set thereon and connected can be fixed in relation to the weighing cell.

8. A weighing cell according to the preceding claim, **characterised in that** the quick-action clamping connection can be actuated without tools.

## Revendications

1. Cellule de pesage (1) pour capter le poids de marchandises transportées,
a) dans laquelle les marchandises sont transportées par une installation de convoyage et
b) dans laquelle l'installation de convoyage repose, pour la transmission des poids à capter, sur un récepteur de charge (2) de la cellule de pesage (1),
**caractérisée en ce que**
c) le récepteur de charge (2) de la cellule de pesage (1) présente, pour sa liaison électrique et/ou mécanique avec l'installation de convoyage, une première partie (3) d'un raccordement par fiche, qui peut être reliée à une seconde partie du raccordement par fiche de forme complémentaire, positionnée sur l'installation de convoyage.

2. Cellule de pesage selon la revendication 1, **caractérisée en ce que** l'installation de convoyage peut être reliée ou séparée de manière complètement mécanique et/ou électrique selon que l'on pose l'installation de convoyage sur le récepteur de charge ou que l'on retire l'installation de convoyage du récepteur de charge.

3. Cellule de pesage selon l'une quelconque des revendications précédentes, **caractérisée en ce qu'**en posant l'installation de convoyage sur le récepteur de charge, l'on dote, par le biais du raccordement par fiche, l'installation de convoyage de toutes les connexions électriques requises pour son fonctionnement.

4. Cellule de pesage selon l'une quelconque des revendications précédentes, **caractérisée en ce que** le raccordement par fiche est conçu de sorte à être protégé contre la torsion ou l'inversion de polarité.

5. Cellule de pesage selon l'une quelconque des revendications précédentes, **caractérisée en ce que** le raccordement par fiche présente des moyens de centrage (4) permettant un ajustement de précision pour aligner les deux parties du raccordement par fiche lors de leur assemblage.

6. Cellule de pesage selon l'une quelconque des revendications précédentes, **caractérisée en ce que** le raccordement par fiche est protégé contre les explosions et/ou protégé IP et/ou encapsulé dans du métal pour l'amélioration de la compatibilité électromagnétique.

7. Cellule de pesage selon l'une quelconque des revendications précédentes, **caractérisée en ce que** la cellule de pesage présente un raccord de serrage rapide démontable permettant de fixer l'installation de convoyage posée et reliée par rapport à la cellule de pesage.

8. Cellule de pesage selon la revendication précédente, **caractérisée en ce que** le raccord de serrage rapide est maniable sans outil.
